# EUROPEAN PATENT APPLICATION

(11) **EP 3 766 769 A1**
(43) Date of publication of application: **20.01.2021**
(21) Application number: 19766856.9
(22) Date of filing: 15.03.2019
(51) Int. Cl.: B62J 11/00

(54) **HOLDER FOR VEHICLE, AND VEHICLE**

(30) Priority: 16.03.2018 CN 201810219087
(71) Applicant: Bosch Automotive Products (Suzhou) Co., Ltd., Jiangsu 215021 (CN)
(72) Inventor: WINKLER, Dominic, Suzhou, Jiangsu 215021 (CN); MORERA AGUSTI, Marc, Suzhou, Jiangsu 215021 (CN); PAN, Yao, Suzhou, Jiangsu 215021 (CN); GALANTI, Giorgio, Suzhou, Jiangsu 215021 (CN)
(74) Representative: Bee, Joachim
(86) International application number: PCT/CN2019/078318
(87) International publication number: WO 2019/174639

(57) **Abstract**

The present application discloses a support for a vehicle, and a vehicle. The support comprises: a media stand, for fixing a media apparatus; and an accessory support, disposed close to the media stand and used to removably fix an accessory, wherein the accessory fixed to the accessory support covers at least a part of the media stand. The present application provides space on the vehicle for stowing the media apparatus and vehicle accessory.

## Description

### Technical field

The present application relates to a vehicle, in particular to a vehicle with an exposed media stand, such as a two-wheeled motorcycle or electric vehicle. The present application further relates to a vehicle support.

### Background art

The HMI (Human Machine Interface) of an electric vehicle, in particular an electric motorcycle capable of travelling at high speed, has few functions and a low high-tech content, and being exposed outdoors for long periods of time, suffers obvious wear. Modern smartphones, on the other hand, are updated quickly and have powerful functions, so the functions of electric vehicle HMIs can be replaced by mobile phones. However, mobile electronic devices such as mobile phones cannot be used while riding. If a mobile phone is put in a driver's pocket, then incoming calls and messages are difficult to see and sense in noisy environments; if the mobile phone is grasped in the hand, then driving safety is compromised, and so there is even less possibility of operating the mobile phone. If the driver needs to make a call, he or she must stop at the roadside. Furthermore, when the driver stops riding, the electric vehicle has nowhere to stow a helmet.

### Content of the invention

One aspect of the present application is the provision of a support for a vehicle, comprising:
a media stand, for fixing a media apparatus; and
an accessory support, disposed close to the media stand and used to removably fix an accessory, wherein the accessory fixed to the accessory support covers at least a part of the media stand.

Another aspect of the present application is the provision of a vehicle, comprising
a front end,
the abovementioned support, the support being disposed on the front end; and
a wearable accessory, being removably fixable to the accessory support, wherein the accessory fixed to the accessory support covers at least a part of the media stand.

The present application provides space on the vehicle for stowing the media apparatus and vehicle accessory. The media apparatus has a display screen or human-machine interface; thus, while riding, a driver can see relevant information and perform operations to interact with the media apparatus. The accessory is supported on and locked to the support; the accessory can serve as a cover to keep the media stand inside clean and dry.

Through the detailed explanation below which makes reference to the accompanying drawings, other aspects and features of the present application will become obvious. However, it should be known that the drawings are designed purely for explanatory purposes, and do not limit the scope of the present application; this is because it should refer to the attached claims. It should also be known that the drawings are merely intended to conceptually illustrate the structures and procedures described here; unless otherwise specified, the drawings need not be drawn to scale.

### Description of the accompanying drawings

A fuller understanding of the present application will be gained by reading the detailed explanation of particular embodiments below in conjunction with the drawings; identical reference labels in the drawings always denote identical elements in the drawings. Here:
fig. 1 is a structural schematic drawing of the support to which the present application relates;
fig. 2a is a schematic drawing of the support shown in fig. 1 after a helmet has been unlocked;
fig. 2b is a schematic drawing of a helmet carrier in a closed position;
fig. 2c is a schematic drawing of the helmet carrier in an open position;
fig. 3a is an enlarged schematic drawing of the helmet carrier in the closed position;
fig. 3b is an enlarged schematic drawing of the helmet carrier in the open position;
fig. 4a is a schematic drawing of a mobile electronic device being put into a box;
fig. 4b is a schematic drawing of a connector in the box in a removal/installation position;
fig. 4c is a schematic drawing of the connector in fig. 4b in a storage position;
fig. 5 is a schematic drawing of the mobile electronic device being put into the box and, after closing and locking, being put into the media stand;
fig. 6 is a schematic drawing of an operation being performed on the box, with the mobile electronic device having been put therein, on the media stand;
fig. 7a is a schematic drawing of the connection of the media stand and the box;
fig. 7b is a schematic drawing of the box being taken off the media stand and an operation being performed on the mobile electronic device;
fig. 8 is a structural schematic drawing of an embodiment of the helmet;
fig. 9 is a schematic drawing of an embodiment of helmet unlocking; and
fig. 10 is a structural schematic drawing of another embodiment of the helmet.

### Particular embodiments

In order to help those skilled in the art to achieve a precise understanding of the subject matter for which protection is claimed in the present application, particular embodiments of the present application are described in detail below in conjunction with the accompanying drawings.

The support to which the present application relates is a part on a front end of a vehicle; the support provides a space for placing a media apparatus and a vehicle accessory, enabling a driver to obtain information and perform human-machine interaction operations via the media apparatus; when the driver has stopped riding, the accessory can also be fixed to the vehicle. The media apparatus has a display interface or an interactive operating interface, to display vehicle-related information. The media apparatus may be a dashboard, permanently fixed to the vehicle and indicating vehicle information, or a mobile electronic device removably fixed to the vehicle. Mobile electronic devices include but are not limited to a series of portable electronic products such as mobile phones, tablet computers and personal computers. Vehicle accessories are wearable devices for drivers, including but not limited to helmets, glasses, earphones (such as earphones worn on the head), armour, clothing (such as gilets), etc. Vehicles include electric vehicles, such as electric motorcycles, electric bicycles, electric vehicles with no cabin or canopy, electric vehicles with an exposed head and two-wheeled electric vehicles, or other vehicles, such as motorcycles and bicycles.

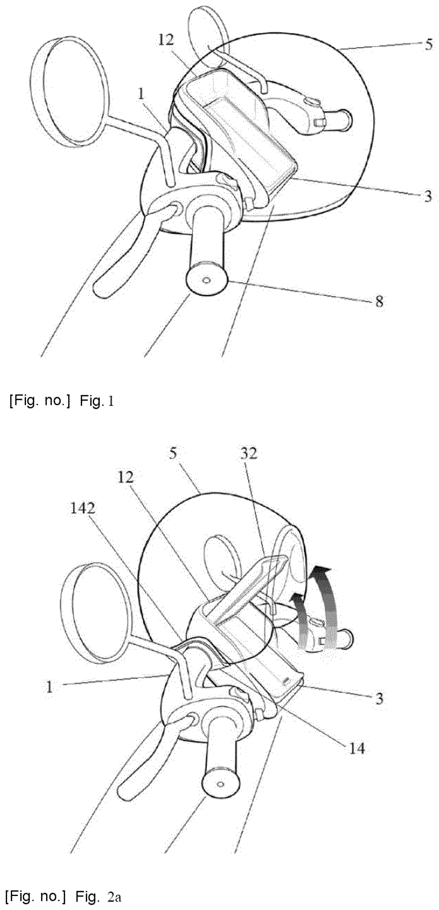

Referring to fig. 1, the support is located on the front end. Two handlebars 8 are provided on the front end, with the support being located between the two handlebars 8. The support comprises a support body 1. The support body 1 is integrated with the handlebars 8. The support body 1 comprises a media stand 12; the media stand 12 is located at the centre of the front end and extends out from the support body 1 in order to provide a space for supporting and docking another object. A box 3 is joined to the media stand 12. A receiving space is provided inside the box 3, for receiving a mobile electronic device (not shown). A helmet 5 is supported on the support body 1 and fixed to the support body 1. As shown in the figure, the helmet 5 is in a state of being locked to the support body 1; in this state, the helmet 5 surrounds the media stand 12 and the box 3 in order to cover the media stand 12 and the box 3, thereby protecting the box 3 from sunlight, rain and dust. In the embodiment shown in the figure, the helmet 5 substantially covers the media stand 12 and the box 3, isolating the media stand 12 and the box 3 from the outside. Of course, the helmet 5 may also cover a part of the media stand 12 and/or a part of the box 3, according to design needs. Since the helmet 5 is locked to the support body 1, an anti-theft effect is also achieved, so the driver can leave the helmet 5 on the vehicle without any worries after finishing a period of riding. When the helmet 5 is in a state of being unlocked from the support body 1, the helmet 5 can be taken off the support body 1.

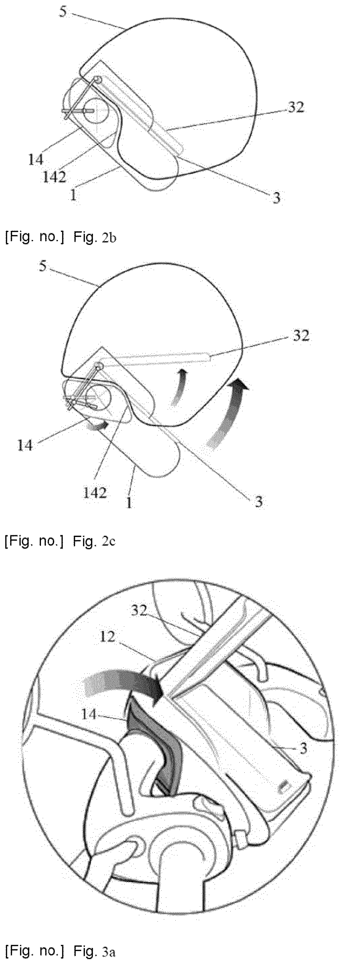

Fig. 2a shows the process of unlocking the helmet 5 from the support body 1. An accessory support is disposed on the support body 1, providing support for the helmet 5. When the helmet 5 is fixed to the accessory support, the helmet 5 can cover the media stand 12. The accessory support may be a part of the support body 1, or an auxiliary member installed on the support body 1. The accessory support may be configured to be stationary or movable relative to the support body 1. As shown in the figure, the accessory support is a helmet carrier 14 close to the media stand 12. The helmet 5 is connected to the support body 1 by means of an accessory lock; the lock is opened using a key or electronic verification, etc. The helmet 5 may be connected to the support body 1 via the helmet carrier 14 or a lock of another type, or the helmet 5 may be lock-connected to the support body 1 directly. For example, an electronic lock, electromagnetic lock or mechanical lock, etc. may be disposed between the helmet 5 and the helmet carrier 14, to implement locking and unlocking in a triggered or mechanical manner, etc. As another example, the helmet carrier 14 provides support, and any one of the abovementioned types of accessory lock is disposed on another part of the helmet 5 and is locked directly to the support body 1; unlocking is accomplished by means of a push-button, by scanning a code or by Bluetooth, etc. As shown in the figure, the helmet carrier 14 is semi-annular, two ends thereof being arranged at two sides of the media stand 12 respectively; the distance between the two ends matches the size of the helmet 5. As shown in the figure, the helmet carrier 14 is a rotary member, which is rotatable relative to the support body 1 and the media stand 12. A guide part 142 is disposed on an upper surface of the helmet carrier 14; the shape of the guide part 142 fits a part of a profile of the helmet 5. Thus, when the helmet 5 is placed on the helmet carrier 14, the helmet 5 can rapidly find a position in which it fits the helmet carrier 14 along the guide part 142. An attractive-attachment member, such as a magnet or electromagnet, is disposed on the helmet carrier 14 to hold the helmet 5 by attraction. The helmet carrier 14, once triggered, can move from an initial state, driving the helmet 5 to rotate, and thereby exposing the media stand 12 and the box 3. A lid 32 is also attached to the box 3; the lid 32 opens or closes the box 3 in a hinged fashion. Continuing to refer to figs. 2b-c, the helmet carrier 14 rotates between a closed position and an open position, wherein the closed position is an initial position; in the closed position, the helmet 5 covers the media stand 12 and the box 3. The receiving space of the box 3 is closed. In the open position, the helmet 5 opens, gradually exposing the media stand 12 and the box 3. The receiving space of the box 3 opens. An elastic element is disposed between the box 3 and the lid 32. The lid 32 moves in linkage with the helmet 5. The elastic element may be constructed to be in a deformed state when the lid 32 is open or closed. If the elastic element is in a deformed state when the lid 32 is open, the box 3 being closed is an original state; the interior of the helmet 5 is connected to the lid 32; at the same time as the helmet carrier 14 rotates with the helmet 5 from the closed position shown in fig. 2b to the open position shown in fig. 2c, the lid 32 opens together with the helmet 5; the elastic element begins to deform; once the helmet 5 separates from the support body 1, the lid 32 will immediately close the box 3. If the elastic element is in a deformed state when the lid 32 is closed, the box 3 being open is an original state; there may be no connection between the helmet 5 and the lid 32; at the same time as the helmet 5 rotates from the closed position shown in fig. 2b to the open position shown in fig. 2c, the lid 32 also gradually opens upwards from the box 3 under the action of an elastic force, exposing the receiving space, and a mobile electronic device can thereby be put in.

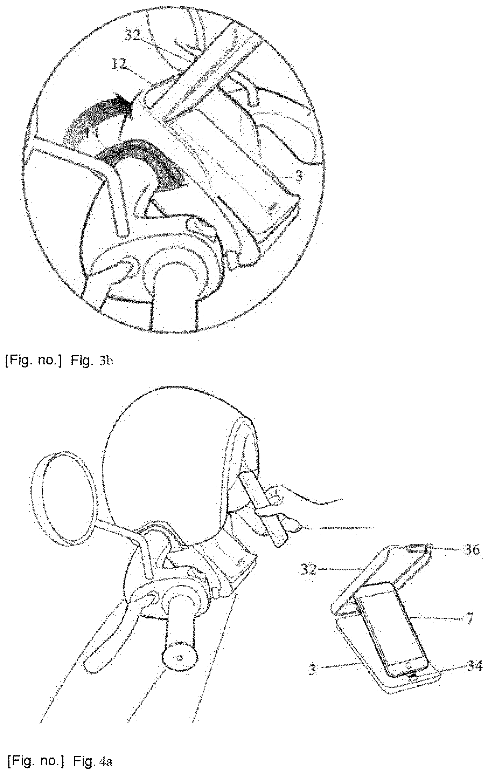

When the helmet 5 is in an unlocked state, the helmet 5 may be taken off the helmet carrier 14. Referring to figs. 3a-b, when the helmet 5 separates from the helmet carrier 14, the helmet carrier 14 can automatically and rapidly return to the closed position shown in fig. 3a, in preparation for conveniently receiving the helmet 5 next time.

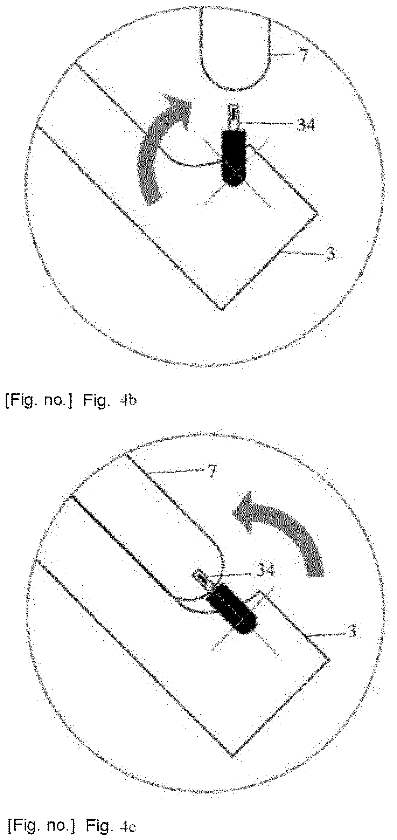

Referring to fig. 4a, a mobile electronic device 7 is put into the box 3. A connector 34 is disposed in the box 3, to engage with the mobile electronic device 7. The connector 34 is constructed so as to fit a data port of the mobile electronic device 7 and thereby realize the electrical connection of the mobile electronic device 7. The connector 34 rotates between a removal/installation position shown in fig. 4b and a storage position shown in fig. 4c. In the removal/installation position, an interface of the connector 34 faces out of the receiving space, to facilitate connection to or withdrawal from the mobile electronic device 7. Once the mobile electronic device 7 has been connected, the connector 34 rotates to the storage position, at which time the mobile electronic device 7 connected to the connector 34 is received into the receiving space of the box 3, and the lid 32 can close the box 3. Due to the fact that the connector 34 is rotatable, the mobile electronic device 7 can be inserted into the box 3 or withdrawn from the box 3 with ease. A snap-fit connector 36 is disposed at the bottom of the lid 3; the lid 32 is closed onto and locked to the box 3 by means of the snap-fit connector 36.

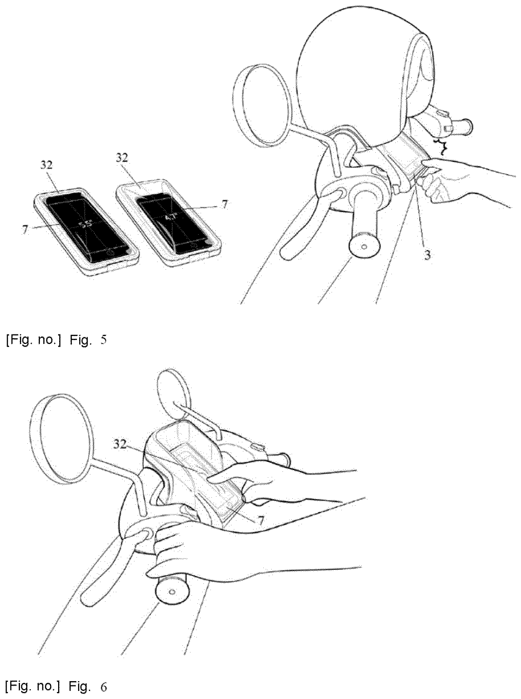

A window is disposed on the lid 32 to display screen content of the mobile electronic device 7 in the box 3. The window may be covered by a film made of a flexible material, thus mobile electronic devices 7 of different sizes can be accommodated in the box 3; as shown in fig. 5, the lid 32 having such a film can display the screens of mobile electronic devices 7 of two sizes which are commonly seen at the present time, i.e. 4.7 inches and 5.5 inches. Of course, such a lid 32 could also display the screens of mobile electronic devices 7 of other larger or smaller sizes in addition to these two sizes, and the versatility of the box 3 is thereby increased. Furthermore, since the lid 32 is flexible, the size range of thicknesses of mobile electronic devices 7 which can be accommodated is expanded. A slightly thicker mobile electronic device 7 will cause the lid 32 to bulge outwards after closing, but this will not affect the insertion of the mobile electronic device 7. The lid 32 in the form of the film is also transparent and operable; the driver may read displayed content of the mobile electronic device 7 through the lid 32 and operate a touch screen on the mobile electronic device 7 through the lid 32 (see fig. 6). The design of the lid 32 having the abovementioned properties not only makes the mobile electronic device 7 resistant to water and dust, but also prevents the mobile electronic device 7 from being taken away maliciously by another person during riding. Moreover, while riding, the driver does not need to withdraw the mobile electronic device 7, but can operate the touch screen on the mobile electronic device 7 with a finger directly through the lid 32.

Referring to figs. 4a and 5 - 6, the snap-fit connector 36 is disposed at the bottom of the lid 32. When the helmet 5 is not on the support, as long as the lid 32 is locked to the box 3, additional protection can be provided for the mobile electronic device 7 in the box 3, i.e. preventing accidental dropping of the electronic device, and a sealing/anti-splash function. The snap-fit connector 36 is configured in a form that can be fastened and released conveniently; the box 3 can be locked with one or two simple actions, accompanied by a "click" sound. Furthermore, apart from the bottom position shown in the figures, it will be realized that the snap-fit connector 36 may also be disposed in other regions of the lid 32, such as two sides of the lid 32 in order to enhance the sealing of the box.

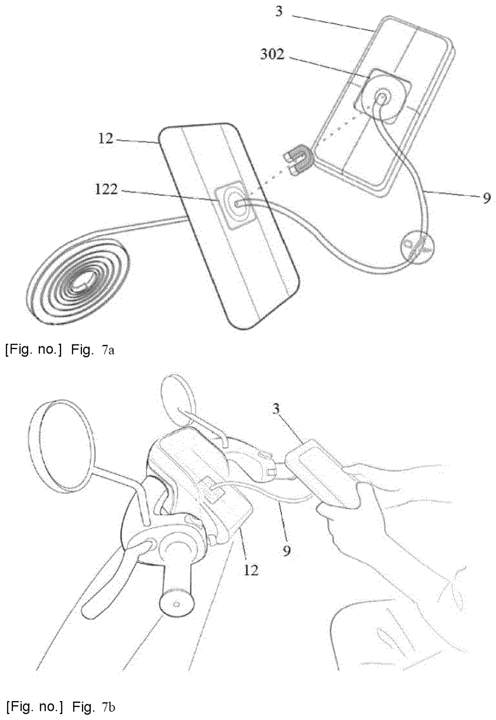

A first docking part 122 is provided on the media stand 12, and the back of the box 3 is provided with a second docking part 302 engaged with the first docking part 122, as shown in fig. 7a. In the embodiment shown in the figure, the first docking part 122 and second docking part 302 are connected by attractive attachment, e.g. by a magnet. A cable 9 also passes through the first docking part 122; the cable 9 is connected to the second docking part 302 in order to supply power to the mobile electronic device. Moreover, the cable 9 is retractable, such that the box 3 can be taken off the media stand 12 and thereby separated from the support without interrupting the power supply, as shown in fig. 7b. The cable 9 has a definite strength and resistance to cutting, preventing the box 3 from being dropped or stolen. Thus, the driver can take out the box 3 and perform an operation on the mobile electronic device 7 while being temporarily stopped. Due to the connection by attractive attachment, the box 3 can be fitted back onto the media stand 12 quickly.

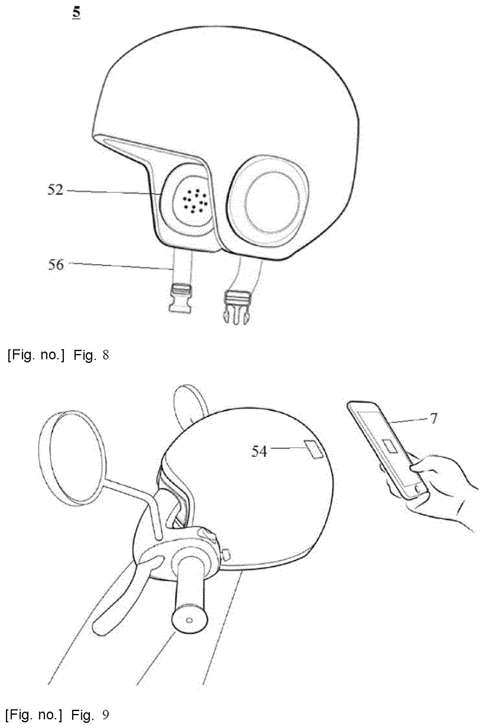

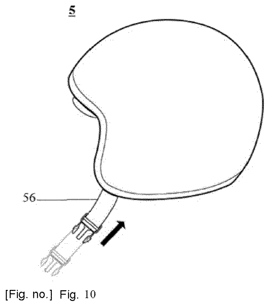

The helmet 5 and mobile electronic device 7 in the present application may be connected to a control unit of a vehicle. As shown in fig. 8, earphones and a microphone 52 are integrated in the helmet 5. Wireless technology, such as Bluetooth transmission, enables the driver to answer incoming calls anytime while riding with the helmet 5 on. As shown in fig. 9, a 2D code 54 is also printed on the helmet 5; when the helmet 5 is locked on the support body 1, the vehicle is in a locked state. App software is downloaded to the mobile electronic device 7, and the vehicle is unlocked by scanning the code. The control unit of the vehicle may be configured such that when the helmet is unlocked, the vehicle is unlocked, or configured such that the helmet 5 is unlocked automatically once the vehicle is unlocked, or the control unit unlocks the helmet 5 and the vehicle simultaneously after receiving a signal. As shown in fig. 10, a retractable strap 56 is also provided on the helmet 5; during use, the strap 56 is pulled out of the helmet 5, and the helmet 5 is secured by fastening a buckle. When not in use, the strap 56 is retracted into the helmet 5 so it is protected from rain and dust.

The process of using a vehicle with the support of the present application integrated therein is presented below. When the vehicle is in a parked state, the helmet 5 is locked on the support body 1. When the vehicle needs to be used, the helmet 5 and the vehicle are unlocked. The helmet carrier 14 is triggered and drives the helmet 5 to rotate from the closed position to the open position; in the course of this rotation, the lid 32 of the box 3 also gradually opens. At this time, the helmet 5 can be taken off the helmet carrier 14, and the mobile electronic device 7 can be put into the box 3. The mobile electronic device 7 engages with the connector 34 in the box 3 in order to be put into the box 3. The lid 32 is then closed, and the box 3 is locked by means of the snap-fit connector 36. The helmet carrier 14 returns to its original position. The connection between the mobile electronic device 7 and the connector 34 not only enables the mobile electronic device 7 to be charged, but also establishes a data connection between the mobile electronic device 7 and the control unit of the vehicle. By performing operations on the mobile electronic device 7, the driver can find out vehicle condition information or perform tasks such as navigation. The driver does not need to pick up the electronic device 7 while riding and thereby put himself in danger.

When riding ends, the driver opens the box 3, and takes out the mobile electronic device 7. The helmet 5 is put back onto the helmet carrier 14; due to the fact that the guide part 142 and magnet are disposed on the helmet carrier 14, and the helmet carrier has already returned to the closed position, the helmet 5 very quickly finds a position in which it is positionally fixed with the helmet carrier 14; the lid 32 is then pressed downwards by the helmet 5, and the helmet 5 is locked on the helmet carrier 14. The earphones and microphone 52 are integrated in the helmet 5. A charging apparatus is disposed on the support; in a locked state, the vehicle can charge the helmet 5.

Although particular embodiments of the present application have been shown and described in detail in order to explain the principles of the present application, it should be understood that the present application may be implemented in other ways without departing from such principles.

## Claims

1. Support for a vehicle, **characterized by** comprising:
a media stand (12), for fixing a media apparatus; and
an accessory support, disposed close to the media stand (12) and used to removably fix an accessory, wherein the accessory fixed to the accessory support covers at least a part of the media stand (12).

2. Support according to Claim 1, **characterized in that** the accessory support is constructed to be able to rotate with the accessory between a closed position and an open position relative to the media stand (12); in the closed position, the accessory fixed to the media stand (12) covers at least a part of the media stand (12), and in the open position, the accessory fixed to the media stand (12) covers the media stand (12) to a reduced extent.

3. Support according to Claim 2, **characterized in that** the media stand (12) is provided with a receiving space for removably receiving the media apparatus, and the media stand (12) is provided with a lid (32) that moves in linkage with the accessory support; in the closed position, the lid (32) closes the receiving space; in the open position, the lid (32) opens the receiving space.

4. Support according to Claim 2, **characterized by** further comprising an accessory lock capable of safely locking the accessory to the support, the lock being opened by a key or electronic verification, and the accessory support being constructed such that when the accessory is separated from the accessory support, the accessory support automatically returns to the closed position.

5. Support according to Claim 3, **characterized in that** the media stand (12) comprises a removable box (3), the receiving space being disposed in the box (3), and a connector (34) for connecting the media apparatus being disposed in the box (3).

6. Support according to Claim 5, **characterized in that** at least a part of the lid (32) is covered by a flexible, transparent and finger-operable film, the lid (32) is pivoted to the box (3) and provided with a snap-fit connector (36), the lid (32) being lockable to the box (3) by means of the snap-fit connector (36), and the connector (34) is constructed to rotate between a removal/installation position and a storage position; in the removal/installation position, an interface of the connector (34) faces out of the receiving space in order to be connected to or withdrawn from the electronic apparatus; in the storage position, the media apparatus connected to the connector (34) can be received into the receiving space.

7. Support according to Claim 5, **characterized in that** the box (3) is mounted to the support by attractive attachment, and a cable (9) electrically connected to the connector (34) is attached to the box (3), the cable (9) being configured to be retractable such that the box (3) can leave the support while maintaining the electrical connection.

8. Support according to Claim 1, **characterized in that** the accessory support has a guide part (142), the accessory being positioned on the accessory support along the guide part (142), and an attractive-attachment member is also disposed on the accessory support, the accessory being attached to the accessory support by means of the attractive-attachment member.

9. Vehicle, comprising a front end, and **characterized by** further comprising:
a support according to any one of Claims 1 - 8, the support being disposed on the front end; and
a wearable accessory, being removably fixable to the accessory support, wherein the accessory fixed to the accessory support covers at least a part of the media stand.

10. Vehicle according to Claim 9, **characterized in that** the vehicle is a two-wheeled vehicle having two front handlebars, the support being located between the two front handlebars, the accessory is a helmet, earphones and a microphone (52) are disposed in the helmet, the support is provided with an apparatus for charging the helmet, and the helmet has a retractable strap (56).
